Europäisches Patentamt

European Patent Office

Office européen des brevets

(19)

(11) Veröffentlichungsnummer: **0 394 660 A1**

(12) # EUROPÄISCHE PATENTANMELDUNG

(21) Anmeldenummer: **90104951.0**

(22) Anmeldetag: **16.03.90**

(51) Int. Cl.⁵: **C08L 11/00,** //(C08L11/00, 27:12)

(30) Priorität: **29.03.89 DE 3910101**

(43) Veröffentlichungstag der Anmeldung:
**31.10.90 Patentblatt 90/44**

(84) Benannte Vertragsstaaten:
**DE FR GB IT**

(71) Anmelder: **BAYER AG**

**D-5090 Leverkusen 1 Bayerwerk(DE)**

(72) Erfinder: **Obrecht, Werner, Dr.**
**Holderberger Strasse 108**
**D-4130 Moers(DE)**
Erfinder: **Greve, Heinz-Hermann, Dr.**
**Heidemannstrasse 76**
**D-5000 Köln 30(DE)**
Erfinder: **Wendling, Peter, Dr.**
**Franz-Marc-Strasse 9**
**D-5090 Leverkusen 1(DE)**
Erfinder: **Eisele, Ulrich, Dr.**
**Alfred-Kubin-Strasse 13**
**D-5090 Leverkusen 1(DE)**
Erfinder: **Musch, Rüdiger, Dr.**
**Altenberger-Dom-Strasse 169**
**D-5060 Bergisch Gladbach 2(DE)**

(54) **Zur Herstellung hochdämpfender Vulkanisate geeignete Polychloroprenmassen.**

(57) Vulkanisate aus Polychloroprenmassen mit einem Gehalt an fluoriertem Polyolefin besitzen eine erniedrigte Rückprallelastizität, ohne daß die mechanischen Eigenschaften bemerkenswert verschlechert würden.

EP 0 394 660 A1

**Zur Herstellung hochdämpfender Vulkanisate geeignete Polychloroprenmassen**

Die Erfindung betrifft Massen enthaltend Polychloropren und fluoriertes Polyolefin, ein Verfahren zur Herstellung dieser Massen und ihre Verwendung zur Herstellung von hochdämpfenden Vulkanisaten.

Polychloroprenkautschuke sind zur Herstellung niedrigdämpfender Vulkanisate, wie sie z.B für Reifenlaufflächen verwendet werden, geeignet (DI Schurig, Ed. Rubber Division Symposia, Vol I, 122nd meeting of the Rubber Division, ACS Chicago, Illinois, Oct. 5-7, 1982, S. 282-298). Die Vulkanisate besitzen hohe Härte, hohe Spannungswerte sowie hohe Rückprallelastizität.

Seine guten Eigenschaften, wie z.B. Öl-, Hitze- und Ozonbeständigkeit, machen Polychloropren auch für die Herstellung von Dämpfungselementen interessant. Soll die Dämpfung mechanischer Schwingungen nicht durch Sekundärmedien, wie z.B. Öl, Wasser oder Luft, sondern durch den Kautschuk selbst erfolgen, werden zwecks Verminderung der Rückprallelastizität große Mengen Füllstoff eingearbeitet, die jedoch die mechanischen Eigenschaften der Vulkanisate wie Härte, Elastizität, Festigkeit, Bruchdehnung, negativ beeinflussen.

Überraschenderweise wurde nun gefunden, daß Vulkanisate aus Polychloroprenmassen mit einem Gehalt an fluoriertem Polyolefin gegenüber Vulkanisaten aus den derzeit auf dem Markt erhältlichen Polychloroprenen eine deutlich erniedrigte Rückprallelastizität besitzen, ohne daß die mechanischen Eigenschaften bemerkenswert verschlechtert würden.

Gegenstand der Erfindung sind also Massen aus

A) 50 bis 99, vorzugsweise 70 bis 97, insbesondere 80 bis 95, Gew.-% Polychloropren und

B) 1 bis 50, vorzugsweise 3 bis 30, insbesondere 5 bis 20, Gew.-% fluoriertem Polyolefin, wobei sich die Prozentangaben jeweils auf die Summe der Komponenten A + B beziehen.

Geeignete Polychloroprene A sind Chloroprenpolymerisate, die neben polymerisierten 2-Chloropreneinheiten 0,05 bis 30, vorzugsweise 0,1 bis 20 Gew.-%, bezogen auf Chloroprenpolymerisat, copolymerisierte Einheiten anderer ethylenisch ungesättigter Monomerer oder Schwefel enthalten können, also Polychloroprene, wie sie beispielsweise in "Methoden der Organischen Chemie" (Houben-Weyl) Bd. E20/2, 842-859, Georg Thieme Verlag, Stuttgart - New York 1987, beschrieben sind.

Sie besitzen im allgemeinen Mooney-Viskositäten (nach DIN 53 523) von 5 bis 140, vorzugsweise von 10 bis 120, (ML 1 + 4)/100$^\circ$ C und Glasübergangstemperaturen von unter 0$^\circ$ C, vorzugsweise unter -25$^\circ$ C.

Bevorzugte, mit Chloropren copolymerisierbare, ethylenisch ungesättigte "andere Monomere" sind im wesentlichen 2,3-Dichlorbutadien und 1-Chlorbutadien. Schwefelmodifizierte Polychloroprene A sind bevorzugt.

Die Menge an elementarem Schwefel, die für die Herstellung schwefelmodifizierten Polychloroprens verwendet wird, beträgt 0,05 bis 1,5, vorzugsweise 0,1 bis 1, Gew.-%, bezogen auf eingesetzte Monomere. Bei der Verwendung von Schwefelspendern ist deren Menge so zu bemessen, daß der freiwerdende Schwefel den oben angegebenen Mengen entspricht.

Die Polychloroprene A können unvernetzt, d.h. Toluollöslich, oder vernetzt sein. Die Vernetzung kann durch erhöhten Monomerumsatz oder durch Zusatz vernetzend wirkender Monomerer bei der Polymerisation erreicht werden.

Die Herstellung der Polychloroprene A kann auf an sich bekannte Weise, z.B. durch Emulsionspolymerisation bei 0 bis 70$^\circ$ C, vorzugsweise bei 5 bis 50$^\circ$ C erfolgen.

Zur Viskositätsregelung der Polychloroprene A kann die Herstellung in Gegenwart üblicher Kettenübertragungsmittel wie Mercaptane, wie sie z.B in DE-OS 30 02 711, GB-PS 1 048 235, FR-PS 2 073 106 beschrieben sind, oder wie Xanthogendisulfide, wie sie z.B. in der DE-AS 1 186 215, in den DE-OS 21 56 453, 23 06 610 und 30 44 811, in der EP-PS 53 319, in den GB-PS 512 458 und 952 156 und in den US-PS 2 321 693 und 2 567 117 beschrieben sind, erfolgen.

Bei schwefelmodifizierten Polychloroprenen A kann die gewünschte Viskosität durch Verwendung üblicher Peptisationsmittel, wie sie beispielsweise in den DE-OS 1 911 439, 2 018 736, 2 755 074 und 3 246 748, in der DE-PS 2 645 920, in den EP-A 21 212 und 200 857, in der FR-PS 1 457 004 und in den US-PS 2 264 713, 3 378 538, 3 397 173 und 3 507 825 beschrieben sind, eingestellt werden.

Die Polychloroprene A können selbstverständlich auch aus Mischungen verschiedener Chloroprenpolymerisate bestehen.

Die fluorierten Polyolefine B sind hochmolekular und besitzen Glasübergangstemperaturen von über -30$^\circ$ C, in der Regel von über 100$^\circ$ C, Fluorgehalte von 59 bis 76, vorzugsweise 65 bis 76, insbesondere von 70 bis 76, Gew.-% und mittlere Teilchendurchmesser $d_{50}$ von 0,05 bis 2, vorzugsweise 0,08 bis 1, μm. Bevorzugte fluorierte Polyolefine B sind Polytetrafluorethylen, Polyvinylidenfluorid, Tetrafluorethylen/Hexafluorpropylen- und Ethylen/Tetrafluorethylen-Copolymerisate. Die fluorierten Polyolefi-

EP 0 394 660 A1

ne sind bekannt (vgl. Schildknecht, "Vinyl and Related Polymers", John Wiley & Sons, Inc., New York, 1952, Seite 484-494; Wall "Fluorpolymers", Wiley-Intersience, John Wiley & Sons, Inc, New York, Band 13, 1970, Seite 623-654; "Modern Plastics Encyclopedia", 1970-1971, Band 47, Nr 10 A, Oktober 1970, Mc Graw-Hill, Inc., New York, Seite 134, 138 und 774; "Modern Plastics Encyclopedia", 1975-1976, Oktober 1975, Band 52, Nr. 10 A, Mc Graw-Hill, Inc., New York, Seite 27, 28 und 472; K. Hintzer, "Methoden der Organischen Chemie" (Houben-Weyl), Bd. E20/2, 1030-1041, Georg Thieme Verlag, Stuttgart - New York 1987, und US-PS 3 671 487, 3 723 373 und 3 838 092).

Die fluorierten Polyolefine B werden vorzugsweise in nicht gesinterter Form eingesetzt.

Nach einer bevorzugten Ausführungsform der Erfindung werden wäßrige Dispersionen von Polychloropren A und fluoriertem Polyolefin B gemischt, die Polymerisate gemeinsam gefällt und auf an sich bekannte Weise aufgearbeitet.

Für diesen Zweck bevorzugte Dispersionen von Polychloropren A besitzen Feststoffgehalte von 10 bis 60, vorzugsweise von 20 bis 40 Gew.-%, für diesen Zweck bevorzugte Dispersionen von fluoriertem Polyolefin B besitzen Feststoffgehalte von 30 bis 70, vorzugsweise von 50 bis 60, Gew.-%. Die in den Dispersionen vorliegenden mittleren Teilchendurchmesser $d_{50}$ liegen vorzugsweise bei 0,03 bis 0,8, insbesondere 0,1 bis 0,5, $\mu$m.

Werden entsprechend der bevorzugten Ausführungsform -wie oben beschrieben - Mischungen wäßriger Dispersionen des Polychloroprens A und des fluorierten Polyolefins B gemeinsam gefällt, so können sie wie üblich aufgearbeitet werden, z.B. durch Sprühtrocknung, Gefriertrocknung oder Koagulation mittels Zusatz von anorganischen oder organischen Salzen, Säuren, Basen oder organischen, mit Wasser mischbaren Lösungsmitteln wie Alkoholen und Ketonen, vorzugsweise bei Temperaturen von 20 bis 150 °C, insbesondere von 50 bis 100 °C. Die Trocknung kann bei 50 bis 200 °C, bevorzugt zwischen 70 °C und 150 °C erfolgen.

Als Variante der bevorzugten Ausführungsform, wonach das Polychloropren A und das fluorierte Polyolefin B gemeinsam gefällt werden, kann man gemeinsam gefälltes Produkt (A + B) mit Polychloropren A (das frei von fluoriertem Polyolefin B ist) kombinieren. So kann man nach dieser Variante z.B.

a) 25 bis 75, vorzugsweise 40 bis 60, Gewichtsteile Polychloropren A und fluoriertes Poylolefin B, die aus Mischung wäßriger Dispersionen beider Polymeren gemeinsam gefällt worden sind,

b) 75 bis 25, vorzugsweise 60 bis 40, Gewichtsteile Polychloropren A (das frei von fluoriertem Polyolefin B ist) und gegebenenfalls

c) eine hinreichende Menge an fluoriertem Polyolefin, die so hoch ist, daß sich nach Mischen der Komponenten a + b + c der anspruchsgemäße Gehalt an fluoriertem Polyolefin ergibt, miteinander mischen.

Natürlich kann man auch umgekehrt

a) Polychloropren A und fluoriertes Polyolefin B, die aus Mischung wäßriger Dispersionen beider Polymeren gemeinsam gefällt worden sind, und

b) fluoriertes Polyolefin B gemeinsam einsetzen.

Die erfindungsgemäßen Massen enthaltend die Komponenten A und B besitzen im allgemeinen Mooney-Viskositäten von 5 bis 150, vorzugsweise von 10 bis 120, (ML 1 + 4)/100 °C.

Die erfindungsgemäßen Massen enthaltend die Komponenten A und B lassen sich in Gegenwart von Vulkanisationsbe schleunigern aus der Klasse der Zink- und/oder Magnesiumoxide, gegebenenfalls nach Zusatz von Füllstoffen und gegebenenfalls weiteren Zusätzen, bei erhöhter Temperatur, vorzugsweise bei Temperaturen von 100 bis 250 °C, vulkanisieren.

Gummiartikel aus Vulkanisaten der erfindungsgemäßen Massen eignen sich hervorragend als Dämpfungselemente, z.B. Motorlager, Torsionsschwingungsdämpfer, und ähnliche Bauteile.

Die in den nachfolgenden Beispielen angegebenen Teile sind Gewichtsteile; Prozentangaben bedeuten Gewichtsprozente.


Beispiele


I. Herstellung der Ausgangsprodukte


Latex A ( = wäßrige Dispersion eines Chloropren/2,3-Dichlorbutadien-Copolymerisats)

In den ersten Reaktor einer Polymerisationskaskade, bestehend aus 7 gleichen Reaktoren mit einem Volumen von je 50 Liter wurden die wäßrige Phase (W) und die Monomerphase (M) über eine Meß- und

3

Regelapparatur in stets konstantem Verhältnis sowie die Aktivatorphase (A) eingefahren. Die mittlere Verweilzeit je Kessel betrug Minuten.

| (M) = Monomerphase: | |
|---|---|
| Chloropren | 95 Teile |
| 2,3-Dichlorbutadien-(1,3) | 5,7 Teile |
| n-Dodecylmercaptan | 0,22 Teile |
| Phenothiazin | 0,015 Teile |

| (W) = wäßrige Phase: | |
|---|---|
| Entsaltzes Wasser | 125 Teile |
| Natriumsalz der disproportionierten Abietinsäure | 2,8 Teile |
| Natriumsalz eines Kondensationsproduktes aus Naphthalinsulfonsäure und Formaldehyd | 0,7 Teile |
| Kaliumhydroxid | 0,6 Teile |

| (A) = Aktivatorphase: | |
|---|---|
| 1 %ige wäßrige Formamidinsulfinsäurelösung | 0,05 Teile |

Bei einer Innentemperatur von 40° C sprang die Reaktion leicht an. Durch eine Außenkühlung wurde die freiwerdende Polymerisationswärme abgeführt und die Polymerisationstemperatur auf 45° C gehalten. Bei einem Monomerumsatz von 65 % wurde die Reaktion durch Zugabe von Phenothiazin abgebrochen. Das restliche Monomere wurde durch Wasserdampfdestillation bei vermindertem Druck entfernt. Der pH-Wert des Latex wurde mit Essigsäure auf einen Wert von 6,5 gesenkt (Latex A).

Polychloropren A

Aus Latex A wurde durch Gefrierkoagulation das Polymerisat isoliert. Die Mooney-Viskosität betrug 46 (ML 1 + 4)/100° C.

Latex B (= wäßrige Dispersion eines schwefelmodifizierten Chloropren/2,3-Dichlorbutadien-Copoylmerisats)

988 g 2-Chloropren und 12 g 2,3-Dichlorbutadien wurden in 1.250 g Wasser, dem 50 g einer 70 %igen wäßrigen Lösung von disproportionierter Harzsäure, 5 g Natriumsalz eines Naphthalinsulfonsäure-Formaldehyd-Kondensationsproduktes, 5 g Kaliumhydroxid, 3 g wasserfreies Natriumpyrophosphat, 5 g Triisopropanolamin und 10 g wäßrige Schwefeldispersion (50 %ig) zugesetzt waren, emulgiert.

Die Emulsion wurde mit Stickstoff gespült, auf 50° C erwärmt und durch Zugabe von Katalysatorlösung gestartet. Während der Polymerisation wurde weiter Katalysatorlösung so eindosiert, daß die Temperatur des Ansatzes 50° C nicht überstieg. Nach einem Monomerumsatz von 60 % wurden 10 g Tetraethylthiuramdisulfid als 15 %ige Lösung in Chloropren zugesetzt. Bei Erreichen eines Umsatzes von 66 % wurde die Polymerisation durch Zusatz von Diethylhydroxylamin (in Form einer 2,5 %igen wäßrigen Lösung) abgestoppt. Das restliche Monomer wurde durch Wasserdampfdestillation bei vermindertem Druck entfernt. Anschließend wurde der erhaltene Latex 20 Stunden bei 25° C in Gegenwart von 1 g n-Dibutylamin und 12 g Tetraethylthiuramdisulfid peptisiert. Der pH-Wert des Latex wurde mit Essigsäure auf einen Wert von 6,5 gesenkt (Latex B).

4

Polychloropren B

Aus Latex B wurde durch Gefrierkoagulation das Polymerisat isoliert. Die Mooney-Viskosität betrug 33 (ML 1 + 4)/100 ° C.

Latex C ( = wäßrige Dispersion von Polytetrafluorethylen)

®Teflon 30-N der Fa. Du Pont

PTFE

Aus Latex C wurde das Polymerisat mit Calciumchlorid gefällt.

Beispiele 1 bis 6

Die Latices A bzw. B wurden mit Latex in den unten angegebenen Mengen (bezogen auf Feststoff) gemischt und durch Gefrierkoagulation bei pH = 6,5 gefällt und aufgearbeitet.

Tabelle 1

| Beispiel | Latex | | Latex C | Mooney-Viskosität der erhaltenen Mischung * |
|---|---|---|---|---|
| | A | B | | |
| | [Teile] | | [Teile] | [(ML 1 + 4)/100 ° C] |
| 1 | 98 | | 2 | 44 |
| 2 | 95 | | 5 | 46 |
| 3 | 93 | | 7 | 50 |
| 4 | 90 | | 10 | 50 |
| 5 | 80 | | 20 | 49 |
| 6 | | 98 | 2 | 31 |
| Vergleich 1 | Polymer A | | | 46 |
| Vergleich 2 | Polymer B | | | 33 |

* Prüfung am Rohkautschuk nach DIN 53 523, Teil 1-3.

Aus den erhaltenen Rohkautschuken wurden gemäß den nachfolgenden Rezepturen Mischungen hergestellt und diese vulkanisiert.

EP 0 394 660 A1

| Rezeptur 1 | [Teile] |
|---|---|
| Rohkautschuk | 100 |
| Magnesiumoxid [1] | 4 |
| Zinkoxid [2] | 5 |
| Stearinsäure | 1 |
| Alterungsschutzmittel | 1,5 |
| Ozonschutzmittel [4] | 1,5 |
| Ozonschutzwachs [5] | 2 |
| Ruß N-220 [6] | 35 |
| Ruß N-774 [7] | 25 |
| Kaolin [10] | 65 |
| Dispergier- u. Gleitmittel [8] | 3 |
| Weichmacher [9] | 25 |
| Ethylenthioharnstoff | 2 |
| Diphenylthioharnstoff | 2 |

1) Maglite D der Fa. Merck & Co.
2) Zinkoxid aktiv der Fa. Bayer AG = hochdisperses gefälltes Zinkoxid
3) Vulkanox OCD der Fa. Bayer AG
4) Ozonschutzmittel AFD der Fa. Bayer AG
5) Ozonschutzwachs 110 der Fa. Bayer AG
6) Corax 6 der Fa. Degussa
7) Durex 0 der Fa. Degussa
8) A Flux S der Fa. Rhein-Chemie
9) Vulkanol OT der Fa. Bayer AG
10) Kaolin KTG der Fa. Geisenheimer Kaolinwerke Erbslöh u. Co

| Rezeptur 2 | [Teile] |
|---|---|
| Rohkautschuk | 100 |
| Ruß N-762 | 75 |
| Polyetherpolythioether | 10 |
| styrolisiertes Diphenylamin | 2 |
| N-Isopropyl-N'-phenyl-p-phenylendiamin | 0,5 |
| Stearinsäure | 0,5 |
| Magnesiumoxid | 4 |
| Zinkoxid | 5 |

An den erhaltenen Vulkanisaten (Rezeptur 1: 150°C/40 Minuten; Rezeptur 2: 150°C/20 Minuten) bestimmte man Zugfestigkeit, Bruchdehnung und Modul bei 100 % Dehnung nach DIN 53 504 sowie die Rückparallelelastizität nach DIN 53 512 und die Weiterreißfestigkeit nach DIN 53 515.

6

Tabelle 2

| Beispiel | Rezeptur | Vulkanisateigenschaften | | |
|---|---|---|---|---|
| | | Zugfestigkeit (MPa) | Weiterreißfestigkeit (N/mm) | Rückprallelastizität (%) |
| 1 | 1 | 8,6 | 12 | 33 |
| 2 | 1 | 8,6 | 13 | 27 |
| 3 | 1 | 9,8 | 12 | 25 |
| 4 | 1 | 10,1 | 13 | 21 |
| 5 | 1 | 12,1 | 14 | 6 |
| 6 | 2 | 15,7 | 14 | 34 |
| Vergleich 1 | 1 | 9,0 | 12 | 35 |
| Vergleich 2 | 2 | 16,0 | 14 | 36 |

**Ansprüche**

1. Massen aus

A) 50 bis 99 Gew.-% Polychloropren und

B) 1 bis 50 Gew.-% fluoriertem Polyolefin,

wobei sich die Prozentangaben jeweils auf die Summe der Komponenten A + B beziehen.

2. Massen nach Anspruch 1 aus

70 bis 97 Gew.-% A und

3 bis 30 Gew.-% B.

3. Massen nach Ansprüchen 1 und 2 aus

80 bis 95 Gew.-% A und

5 bis 20 Gew.-% B.

4. Verfahren zur Herstellung der Massen nach Ansprüchen 1-3 durch Mischen der wäßrigen Dispersionen der Polymerisate A und B, gemeinsame Fällung und an sich bekannte Aufarbeitung.

5. Verwendung der Massen nach Ansprüchen 1-3 zur Herstellung von Vulkanisaten.

Europäisches
Patentamt

**EUROPÄISCHER RECHERCHENBERICHT**

Nummer der Anmeldung

EP 90 10 4951

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X | FR-A-2 001 385 (GOODYEAR)<br>* Anspruch 1; Seite 4, Zeilen 1-7 *<br>--- | 1-5 | C 08 L 11/00 //<br>(C 08 L 11/00<br>C 08 L 27:12 ) |
| A | GB-A-2 108 974 (BAYER)<br>* Anspruch 1; Seite 1, Zeilen 22-25 *<br>----- | 4 | |
| | | | **RECHERCHIERTE SACHGEBIETE (Int. Cl.5)**<br><br>C 08 L |

Der vorliegende Recherchenbericht wurde für alle Patentansprüche erstellt

| Recherchenort | Abschlußdatum der Recherche | Prüfer |
|---|---|---|
| DEN HAAG | 19-07-1990 | VAN HUMBEECK F.W.C. |

KATEGORIE DER GENANNTEN DOKUMENTE

X : von besonderer Bedeutung allein betrachtet
Y : von besonderer Bedeutung in Verbindung mit einer
    anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
    nach dem Anmeldedatum veröffentlicht worden ist
D : in der Anmeldung angeführtes Dokument
L : aus andern Gründen angeführtes Dokument
................................................................
& : Mitglied der gleichen Patentfamilie, übereinstimmendes
    Dokument

EPO FORM 1503 03.82 (P0403)